# EUROPÄISCHE PATENTANMELDUNG

(11) **EP 3 085 888 A1**
(43) Veröffentlichungstag der Anmeldung: **26.10.2016**
(21) Anmeldenummer: 16159778.6
(22) Anmeldetag: 11.03.2016
(51) Int. Cl.: F01D 1/00, F01D 9/02, F01D 9/04

(54) **TURBINENGEHÄUSE UND ZUGEHÖRIGER ABGASTURBOLADER**

(30) Priorität: 24.03.2015 DE 102015205329
(71) Anmelder: Bosch Mahle Turbo Systems GmbH & Co. KG, 70376 Stuttgart (DE)
(72) Erfinder: ERDEL, Florian, 76707 Hambrücken (DE)
(74) Vertreter: BRP Renaud & Partner mbB Rechtsanwälte Patentanwälte Steuerberater

(57) **Zusammenfassung**

Die vorliegende Erfindung betrifft ein Turbinengehäuse (1) eines Abgasturboladers (2) mit zwei spiralförmigen Abgasfluten (3,4), die über eine Trennwand (5) voneinander getrennt und nach radial außen durch das Turbinengehäuse (1) und nach radial innen durch jeweils eine Spiralzunge (6,7) begrenzt sind, wobei sich die beiden Spiralzungen (6,7) in entgegen gesetzter Richtung von der Trennwand (5) in Richtung des Turbinengehäuses (1) erstrecken.

Erfindungswesentlich ist dabei, dass sich die erste Spiralzunge (6) zwischen der Trennwand (5) und einem abgasrohrseitigen Bereich (9) des Turbinengehäuses (1) und die zweite Spiralzunge (7) zwischen der Trennwand (5) und einem lagergehäuseseitigen Bereich (8) des Turbinengehäuses (1) erstreckt und dass die beiden Spiralzungen (6,7) derart ausgebildet sind, dass bei einer steigenden thermomechanischen Belastung zuerst die erste Spiralzunge (6) versagt.

## Beschreibung

Die vorliegende Erfindung betrifft ein Turbinengehäuse mit zwei spiralförmigen Abgasfluten, die über eine Trennwand voneinander getrennt sind, gemäß dem Oberbegriff des Anspruchs 1. Die Erfindung betrifft außerdem einen Abgasturbolader mit einem solchen Turbinengehäuse.

Bei Abgasturboladern werden oftmals zweiflutige Turbinengehäuse (sogenannte TwinScroll-Turbinengehäuse) eingesetzt, die bis zur Abgasturbine zwei voneinander getrennte spiralförmige Abgasfluten aufweisen. Diese beiden Spiralen bzw. Abgasfluten sind zur Außenseite hin radial durch die Spiralaußenwand des Turbinengehäuses und radial nach innen durch zwei zungenförmige Turbinengehäusebegrenzungen begrenzt, die bis in den Abgaseinlauf der Abgasturbine hineinragen. In Axialrichtung werden die beiden Abgasfluten durch eine sogenannte Trennwand voneinander getrennt. Die beiden Spiralzungen unterliegen aufgrund der Start-Stopp-Zyklen im Betrieb und den damit verbundenen Bauteiltemperaturgradienten sowie den Haltezeiten bei maximaler Abgastemperatur höchsten thermomechanischen Belastungen, was dazu führen kann, dass während der Betriebsdauer eines derartigen Abgasturboladers aufgrund der hohen thermomechanischen Belastung in einem relativ frühen Stadium bereits Anrisse in den beiden Spiralzungen auftreten. In den meisten Anwendungsfällen wachsen diese Risse im weiteren Betriebsverlauf weiter und können im worst case zu einem Durchriss führen, was aufgrund der dann auftretenden Heißgasleckage letztendlich den Totalausfall des Abgasturboladers bedeutet. Dabei hat sich gezeigt, dass die beiden Spiralzungen von solchen TwinScroll-Turbinengehäusen eines der begrenzenden Elemente hinsichtlich der maximal zulässigen Abgastemperatur und des maximal zulässigen Massenstroms darstellen.

Die vorliegende Erfindung beschäftigt sich daher mit dem Problem, für ein Turbinengehäuse der gattungsgemäßen Art eine verbesserte oder zumindest eine alternative Ausführungsform anzugeben, die sich insbesondere durch eine verbesserte Lebenserwartung auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem an sich bekannten Turbinengehäuse mit zwei spiralförmigen Abgasfluten eine Art Sollbruchstelle vorzusehen, die ein definiertes Versagen einer Spiralzunge bei einer kritischen thermomechanischen Belastung erzwingt und dadurch ein Durchreißen des Turbinengehäuses mit einer damit verbundenen Heißgasleckage zuverlässig verhindert. Die beiden spiralförmigen Abgasfluten sind dabei über eine Trennwand voneinander getrennt und nach radial außen durch das Turbinengehäuse und nach radial innen durch jeweils eine Spiralzunge begrenzt. Diese beiden Spiralzungen erstrecken sich dabei in entgegengesetzter Richtung von der Trennwand weg in Richtung des Turbinengehäuses, wobei sich die erste Spiralzunge zwischen der Trennwand und einem abgasrohrseitigen Bereich des Turbinengehäuses und die zweite Spiralzunge zwischen der Trennwand und einem lagergehäuseseitigen Bereich des Turbinengehäuses erstreckt. Erfindungsgemäß sind die beiden Spiralzungen derart ausgebildet, dass bei einer steigenden thermomechanischen Belastung zuerst die erste Spiralzunge versagt.

Die erste Spiralzunge ist somit schwächer ausgelegt als die zweite Spiralzunge, was bei einem Auftreten einer überkritischen thermomechanischen Belastung dazu führt, dass diese zuerst reißt und dadurch ein definiertes Versagensverhalten genau bestimmt werden kann. Üblicherweise ist auch lediglich die zweite Spiralzunge hauptsächlich rissgefährdet und führt bei einem Reißen zudem zu einem Wachsen des Risses durch das Turbinengehäuse und dadurch auch zu der zu vermeidenden Heißgasleckage, weshalb die Erfindung vorschlägt, die erste Spiralzunge als sogenannte Opferzunge auszubilden und ein Reißen derselben in Kauf zu nehmen, um dadurch die Funktionsfähigkeit des Turbinengehäuses und darüber auch des Abgasturboladers insgesamt aufrecht erhalten zu können.

Durch die Ausbildung der nicht durchrissgefährdeten ersten Spiralzunge als sogenannte "Opferzunge" kann eine thermomechanische Entlastung der durchrissgefährdeten zweiten Spiralzunge geschaffen werden. Erreicht werden kann dies beispielsweise dadurch, dass die erste Spiralzunge eine im Vergleich zur zweiten Spiralzunge deutlich reduzierte Wandstärke aufweist, so dass denkbar ist, dass die Wandstärke d₁ der ersten Spiralzunge beispielsweise nur ca. 50 bis 90 % der Wandstärke d₂ der zweiten Spiralzunge beträgt. Durch das Ausführen der ersten Spiralzunge mit einer geringeren Wandstärke kann zudem eine Material- und Gewichtseinsparnis erreicht werden, was insbesondere im Vergleich zu einer aufwendigen und auch teuren Erhöhung der Wandstärken der zweiten Spiralzunge von besonderem Vorteil ist. Außerdem lassen sich hierdurch die notwendigen thermomechanischen Optimierungsschleifen sowie ein damit verbundener Simulations- und Konstruktionsaufwand reduzieren. Das Ausbilden der ersten Spiralzunge mit einer geringeren Wandstärke kann dabei durch eine einfache Änderung eines Gusswerkzeugs erfolgen, sofern das Turbinengehäuse an sich als Gussbauteil, beispielsweise als Stahlgussbauteil, ausgebildet ist. Mit einem derart ausgebildeten Turbinengehäuse kann auch eine sicherere Auslegung desselben erreicht werden und insbesondere kann ein derartiges Turbinengehäuse auch bei höheren Abgastemperaturen zuverlässig betrieben werden.

Bei einer vorteilhaften Weiterbildung der erfindungsgemäßen Lösung sind das Turbinengehäuse, die Trennwand und die Spiralzungen einstückig ausgebildet. Dies ist beispielsweise möglich, sofern das Turbinengehäuse als Metallgussbauteil, beispielsweise als Stahlgussbauteil ausgebildet ist. Hierdurch lässt sich das erfindungsgemäße Turbinengehäuse im Vergleich zu aus dem Stand der Technik bekannte Turbinengehäuse mit gleichem Aufwand, jedoch reduziertem Gewicht, reduziertem Materialeinsatz und damit auch reduzierten Kosten erreichen.

Die Erfindung beruht weiter auf dem allgemeinen Gedanken, ein zuvor beschriebenes Turbinengehäuse in einem Abgasturbolader für ein Kraftfahrzeug einzusetzen, wodurch eine solche Ladeeinrichtung insgesamt temperaturbeständiger ausgebildet werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch ein erfindungsgemäßes Turbinengehäuse eines Abgasturboladers,
- Fig. 2: ebenfalls eine Schnittdarstellung durch das erfindungsgemäße Turbinengehäuse, jedoch in einer anderen Schnittebene.

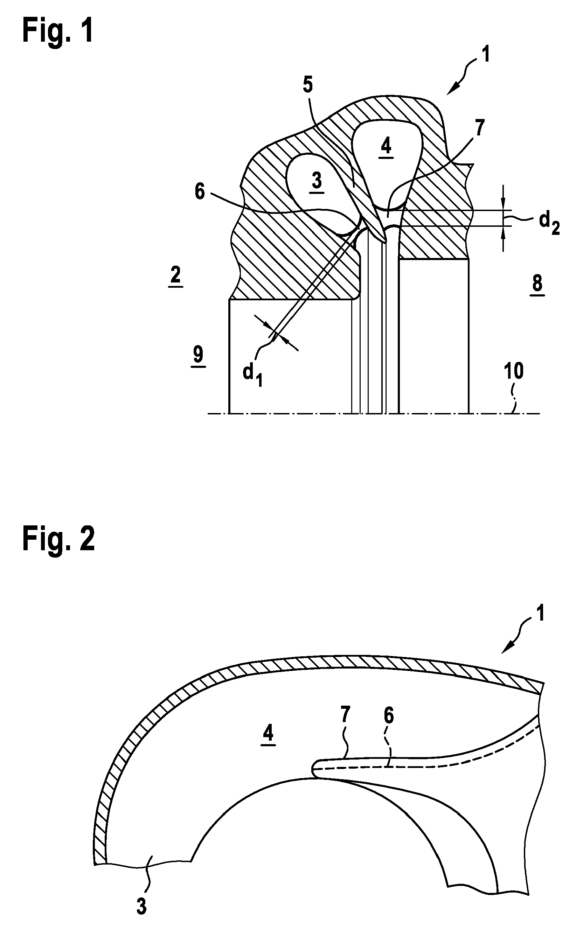

Entsprechend den Fig. 1 und 2, weist ein erfindungsgemäßes Turbinengehäuse 1 eines im Übrigen nicht gezeigten Abgasturboladers 2, zwei spiralförmige Abgasfluten 3, 4 auf, die über eine Trennwand 5 voneinander getrennt und nach radial außen durch das Turbinengehäuse 1 und nach radial innen durch jeweils eine Spiralzunge 6, 7 begrenzt sind. Die beiden Spiralzungen 6, 7 erstrecken sich dabei in entgegengesetzter Richtung von der Trennwand 5 weg in Richtung des Turbinengehäuses 1. Gemäß der Fig. 1 ist dabei lediglich eine obere Hälfte des Turbinengehäuses 1 gezeigt, wobei die Abgasflut 4 benachbart zu einem Lagergehäuse 8 und die Abgasflut 3 benachbart zu einem Abgasrohr 9 angeordnet sind. Im Betrieb des Abgasturboladers 2 ist dabei insbesondere die zweite Spiralzunge 7 hohen thermomechanischen Belastungen ausgesetzt und dadurch rissgefährdet, wobei bei einem Riss der zweiten Spiralzunge 7 sich eine Rissfortsetzung durch das an dieser Stelle vergleichsweise dünne Turbinengehäuse 1 bis nach außen ergeben und dadurch zu einer unerwünschten Heißgasleckage führen könnte. Die beiden Spiralzungen 6, 7 sind dabei erfindungsgemäß derart ausgebildet sind, dass bei einer steigenden thermomechanischen Belastung zuerst die erste Spiralzunge 6 versagt. Dies kann beispielsweise durch unterschiedliche Festigkeiten erreicht werden, wobei die Festigkeit der ersten Spiralzunge 6 geringer ist als die Festigkeit der zweiten Spiralzunge 7, so dass bei einem Erreichen einer kritischen thermomechanischen Belastung auf jeden Fall zuerst die erste Spiralzunge 6 reißt und damit die zweite Spiralzunge 7 entlastet werden kann.

Die erste Spiralzunge 6 weist somit eine Art Sollbruchstelle auf, bzw. ist als Opferzunge ausgebildet und verhindert beim Erreichen einer kritischen Temperaturbelastung das Durchreißen der zweiten Spiralzunge 7 und des damit einhergehenden und unbedingt zu vermeidenden Rissfortschritts durch das Turbinengehäuse 1.

Um die unterschiedlichen Festigkeiten der beiden Spiralzungen 6, 7 möglichst einfach erreichen zu können, weisen die beiden Spiralzungen 6, 7 eine unterschiedliche Wandstärke d₁, d₂ auf, wie dies auch der Fig. 2 deutlich zu entnehmen ist. Beispielsweise besitzt die erste Spiralzunge 6 eine Wandstärke d₁, die nur ca. 50 bis 90 % der Wandstärke d₂ der zweiten Spiralzunge 7 entspricht, so dass bei einem Erreichen einer kritischen mechanischen Belastung auf jeden Fall die erste Spiralzunge 6 zuerst reißt. Selbstverständlich könnte in gleicher Weise auch tatsächlich eine Sollbruchstelle im Bereich der ersten Spiralzunge 6, beispielsweise in der Art einer Querschnittsschwächung, vorgesehen werden.

Generell können das Turbinengehäuse 1 und die Trennwand 5 einstückig ausgebildet sein, wobei zusätzlich selbstverständlich auch noch die beiden Spiralzungen 6, 7 einstückig mit dem Turbinengehäuse 1 ausgebildet sein können. Hierzu kann beispielsweise das Turbinengehäuse 1 als metallisches Gussbauteil, insbesondere aus Aluminiumguss, hergestellt werden. Die beiden Abgasfluten 3, 4 liegen dabei in Bezug auf eine Rotationsachse 10 axial benachbart zueinander.

Generell ist bei dem erfindungsgemäßen Turbinengehäuse 1 das Risiko eines Heißgasleckagerisses nur beim Reißen der zweiten Spiralzunge 7 vorhanden, bei der ersten Spiralzunge 6 aufgrund der geometrischen Situation der TwinScroll-Spirale bei den vorliegenden Beanspruchungsverhältnissen hingegen nicht möglich. Aus diesem Grund wird die erste Spiralzunge 6 erfindungsgemäß derart schwächer ausgelegt als die zweite Spiralzunge 7, dass die erste Spiralzunge 6 als Opferzunge und damit zur thermomechanischen Entlastung der durchrissgefährdeten zweiten Spiralzunge 7 verwendet werden kann. Bei einem Anreißen oder Durchreißen der ersten Spiralzunge 6 hat die zweite Spiralzungen 7 ihre Festigkeit noch lange nicht erreicht, wobei bei einem Durchreißen der ersten Spiralzunge 6 zugleich die zweite Spiralzunge 7 mechanisch entlastet und ein Risiko für Heißgasleckagerisse im Bereich der beiden Spiralzungen 6, 7 reduziert werden kann. Hierdurch lässt sich insbesondere eine höhere Lebensdauer des Turbinengehäuses 1 erreichen.

Durch die Ausführungsform der ersten Spiralzunge 6 mit reduziertem Materialeinsatz und zugleich geringerem Gewicht lässt sich nicht nur die Lebenserwartung und die thermomechanische Belastbarkeit des erfindungsgemäßen Turbinengehäuses 1 steigern, sondern es lassen sich zudem auch Material- und Gewichtsersparnisse erzielen, da insbesondere zur Vermeidung von thermomechanischen Rissen in der zweiten Spiralzunge 7 diese nicht mehr mechanisch verstärkt werden muss. Darüber hinaus lässt sich eine Reduzierung der notwendigen thermomechanischen Optimierungsschleifen und damit auch eine Reduzierung des Simulations- und Konstruktionsaufwand erreichen. Ebenfalls reduziert werden kann eine Anzahl an Versuchen zur Bauteilfestigkeitsabsicherung am Motor bzw. auf einem Heißgasprüfstand. Das erfindungsgemäße Turbinengehäuse 1 kann dabei in einfacher Form durch Änderung eines entsprechenden Gusswerkzeugs realisiert werden. Von weiterem großem Vorteil ist, dass das erfindungsgemäße Turbinengehäuse 1 im Vergleich zu bisher aus dem Stand der Technik bekannten, ähnlichen Turbinengehäusen auch mit höheren Gastemperaturen betrieben werden kann.

## Patentansprüche

1. Turbinengehäuse (1) eines Abgasturboladers (2) mit zwei spiralförmigen Abgasfluten (3,4), die über eine Trennwand (5) voneinander getrennt und nach radial außen durch das Turbinengehäuse (1) und nach radial innen durch jeweils eine Spiralzunge (6,7) begrenzt sind, wobei sich die beiden Spiralzungen (6,7) in entgegen gesetzter Richtung von der Trennwand (5) in Richtung des Turbinengehäuses (1) erstrecken,
**dadurch gekennzeichnet,**
- **dass** sich die erste Spiralzunge (6) zwischen der Trennwand (5) und einem abgasrohrseitigen Bereich (9) des Turbinengehäuses (1) und die zweite Spiralzunge (7) zwischen der Trennwand (5) und einem lagergehäuseseitigen Bereich (8) des Turbinengehäuses (1) erstreckt,
- **dass** die beiden Spiralzungen (6,7) derart ausgebildet sind, dass bei einer steigenden thermomechanischen Belastung zuerst die erste Spiralzunge (6) versagt.

2. Turbinengehäusenach Anspruch 1,
**dadurch gekennzeichnet,**
**dass** die erste Spiralzunge (6) eine geringere Wandstärke (d₁) und damit eine geringere Festigkeit aufweist, als die zweite Spiralzunge (7).

3. Turbinengehäuse nach Anspruch 1 oder 2,
**dadurch gekennzeichnet,**
**dass** die Wandstärke d₁ der ersten Spiralzunge (6) nur ca. 50% bis 90% der Wandstärke d₂ der zweiten Spiralzunge (7) beträgt.

4. Turbinengehäuse nach einem der Ansprüche 1 bis 3,
**dadurch gekennzeichnet,**
**dass** zumindest das Turbinengehäuse (1) und die Trennwand (5) einstückig ausgebildet sind.

5. Turbinengehäuse nach einem der Ansprüche 1 bis 4,
**dadurch gekennzeichnet,**
**dass** das Turbinengehäuse (1), die Trennwand (5) und die Spiralzungen (6,7) einstückig ausgebildet sind.

6. Turbinengehäuse nach einem der Ansprüche 1 bis 5,
**dadurch gekennzeichnet,**
**dass** das Turbinengehäuse (1) als Gussteil, insbesondere als Stahlgussbauteil, ausgebildet ist.

7. Turbinengehäuse nach einem der Ansprüche 1 bis 6,
**dadurch gekennzeichnet,**
**dass** die beiden Abgasfluten (3,4) axial benachbart zueinander angeordnet sind.

8. Abgasturbolader für ein Kraftfahrzeug mit einem Turbinengehäuse (1) nach einem der Ansprüche 1 bis 7.
